# EUROPÄISCHE PATENTSCHRIFT

(11) **EP 2 012 999 B1**
(45) Veröffentlichungstag und Bekanntmachung des Hinweises auf die Patenterteilung: **20.04.2011**
(21) Anmeldenummer: 07724515.7
(22) Anmeldetag: 24.04.2007
(51) Int. Cl.: B29C 49/12, B29B 11/14

(54) **VERFAHREN ZUR HERSTELLUNG EINES BEHÄLTERS AUS KUNSTSTOFF, VORFORMLING ZUR HERSTELLUNG EINES KUNSTSTOFFBEHÄLTERS SOWIE KUNSTSTOFFBEHÄLTER**
PROCEDURE FOR THE MANUFACTURING OF A PLASTIC CONTAINER, PREFORM FOR THE MANUFACTURING OF A PLASTIC CONTAINER, AND PLASTIC CONTAINER
PROCÉDÉ DE FABRICATION D'UN RÉCIPIENT EN PLASTIQUE, PRÉFORME POUR LA FABRICATION D'UN RÉCIPIENT EN PLASTIQUE ET RÉCIPIENT EN PLASTIQUE AINSI OBTENU

(30) Priorität: 01.05.2006 CH 711062006
(43) Veröffentlichungstag der Anmeldung: 14.01.2009
(73) Patentinhaber: Alpla Werke Alwin Lehner GmbH & CO. KG, 6971 Hard (AT)
(72) Erfinder: SIEGL, Robert, 6850 Dornbirn (AT)
(74) Vertreter: Hasler, Erich
(86) Internationale Anmeldenummer: PCT/EP2007/003585
(87) Internationale Veröffentlichungsnummer: WO 2007/124894

(56) Entgegenhaltungen:
- GB-A- 1 037 115
- GB-A- 1 110 703
- US-A- 3 221 954
- US-A- 4 595 552
- US-A1- 2004 142 132

## Beschreibung

Die Erfindung betrifft einen Verfahren zur Herstellung eines Behälters aus Kunststoff, insbesondere einer Kunststoffflasche, in einem Streckblasverfahren gemäss dem Oberbegriff des Patentanspruchs 1. Die Erfindung betrifft auch einen für das Streckblasverfahren geeigneten Preform gemäss dem Oberbegriff des Patentanspruches 10.

Die in der Vergangenheit üblichen Behältnisse aus Weiss- oder Buntblech, aus Glas oder auch aus Keramik werden in zunehmendem Masse von Behältnissen aus Kunststoff abgelöst. Insbesondere für die Verpackung von schüttfähige Medien, beispielsweise von Reinigungsutensilien, Körperpflegemitteln, Kosmetika, Kfz-Medien, usw., kommen hauptsächlich Kunststoffbehältnisse zum Einsatz. Das geringe Gewicht, und die geringeren Kosten spielen sicher eine nicht unerhebliche Rolle bei dieser Substitution. Die Verwendung rezyklierbarer Kunststoffmaterialien und die insgesamt günstigere Gesamtenergiebilanz bei ihrer Herstellung tragen auch dazu bei, die Akzeptanz von Kunststoffbehälthissen, insbesondere von Kunststoffflaschen, beim Konsumenten zu fördern.

Die am häufigsten eingesetzten Kunststoffflaschen bestehen aus Polyethylenterephthalat (PET) und werden üblicherweise in einem sogenannten Spritzstreckblasverfahren hergestellt. Bei diesen Verfahren handelt es sich um eine Kombination aus Spritzgiessen und Blasformen. Dabei wird zunächst in einem Spritzgiessprozess in einer Spritzform ein PET-Preform hergestellt. Neuerdings sind auch Fliesspressverfahren zur Herstellung von Preforms vorgeschlagen worden. Der Preform weist einen im wesentlichen länglichen, zylindrischen Körper auf und ist an einem Längsende geschlossen ausgebildet. Ein Supportring trennt den Körper von einem Halsabschnitt mit einer Ausgiessöffnung. Der Halsabschnitt weist üblicherweise bereits die spätere Form des Flaschenhalses auf. An der Aussenseite des Halsabschnitts sind bereits Gewindeabschnitte oder dergleichen für die Festlegung eines Verschlussteils ausgebildet. Der Preform wird nach seiner Herstellung entformt und gleich weiterverarbeitet oder für eine spätere Verarbeitung auf einer Blasmaschine zwischengelagert. Vor der Weiterverarbeitung in einer Blasmaschine wird der Preform bei Bedarf konditioniert; danach wird er in eine Blasform einer Blasmaschine eingebracht. In der Blasform wird der Preform schliesslich durch ein mit Überdruck eingeblasenes Gas gemäss der Formkavität aufgeblasen und dabei zusätzlich mit einem Reckdorn verstreckt. Es ist auch bereits ein Spritzblasverfahren bekannt, bei dem der Blasprozess direkt anschliessend an das Spritzen des Preforms erfolgt. Der Preform verbleibt dabei auf dem Spritzkern, der zugleich den Reckdom bildet. Der Preform wird wiederum durch Überdruck gemäss der Formkavität einer Blasform, die auf den Spritzkern zugestellt wird oder umgekehrt, aufgeblasen und dabei vom Reckdorn verstreckt. Danach wird die fertige Kunststoffflasche entformt.

Das am häufigsten für die Herstellung von Kunststoffbehältern, insbesondere Kunststoffflaschen, eingesetzte Material ist Polyethylenterephthalat (PET). PET wird wegen seines durch das Verstrecken beeinflussbaren Kristallisationsgrads und wegen seiner relativ niedrigen Materialkosten geschätzt. Andererseits weist PET eine relativ niedrige Festigkeit auf, weshalb die Wandstärken von PET-Flaschen gewisse Mindestwerte nicht unterschreiten dürfen. Im Zusammenhang mit der Dichte von PET von etwa 1.33 g/cm³ weisen PET-Flaschen daher immer noch ein verhältnismässig grosses Gewicht auf. Jüngst sind daher auch schon Überlegungen angestellt worden, das PET durch ein Material niedrigerer Dichte zu ersetzen. Dabei wird insbesondere Polystyrol ins Auge gefasst, welches eine Dichte von nur 1.05 g/cm³ aufweist Durch Schäumen von Polystyrol sind noch deutlich geringere Dichten erzielbar. Polystyrol ist in der Verpackungsindustrie vielfach bewährt und weist insbesondere in der Lebensmittelverpackung Vorteile gegenüber anderen Kunststoffmaterialien auf. So ist es beispielsweise beständig gegenüber Gamma-Strahlung und ermöglicht dadurch eine Strahlungssterilisation. Wegen seiner biologischen Abbaubarkeit ist Polystyrol auch ökologisch von Interesse. In Verbindung mit Elastomeren wird Polystyrol zu einem schlagfesten Material, das auch widrigen Beanspruchungen standhält. Behälter aus Polystyrol werden üblicherweise spritzgegossen oder durch Thermoformen hergestellt.

Die GB-A-1,037,115 bezieht sich auf ein Verfahren und eine Vorrichtung zur Herstellung eines geblasenen Produkts aus einem thermoplastischem Kunststoff. Dabei wird aus einem thermoplastischen Material zuerst ein Preform hergestellt, welcher alsdann etwas abgekühlt und zur endgültigen Form aufgeblasen wird.

Während des Aufblasens wird das Material zudem biaxial verstreckt. Im Falle von Polystyrol wird dieses zur Herstellung auf oberhalb die Schmelztemperatur von 96 bis 102 °C erwärmt, dann auf knapp unter die Schmelztemperatur von 83 bis 96 °C abgekühlt, mit einem Reckstab gestreckt und radial aufgeblasen. Beim Streckvorgang müssen die erwähnten Temperaturen mit einer Genauigkeit von ± 3 bis 5 °C eingehalten werden. Gemäss GB-A-1,037,115 wird das Material in jeder Richtung, d.h. axial und radial, um jeweils 300% bis 500% gestreckt. Dies ergibt ein globales Streckverhältnis von 9 bis 25. Die GB-A-1,037,115 macht keine Angaben über die Wandstärke des verwendeten Vorformlings.

Die GB-A-1,110,703 offenbart ein Verfahren und eine Vorrichtung zum Blasformen von Artikeln aus Kunststoffen, wie Polyvinylchlorid oder Polystyrol, die zu Spannungsrissen neigen. Dabei wird in dem beschriebenen Herstellprozess zuerst ein multiaxial orientierter Vorformling hergestellt. Die Herstellung des multiaxial orientierten Vorformlings geschieht, indem während des Spritzvorgangs gleichzeitig ein Drehmoment ausgeübt wird, indem eine der Formhälften rotiert wird. In einem nachfolgenden Schritt wird der multiaxial orientierte Vorformling wieder erwärmt und in einer Kavität zu seiner endgültigen Gestalt aufgeblasen, wobei dann allerdings kein Reckdom zum Einsatz gelangt. Das globale Streckverhältnis ist dabei in der Grössenordnung von lediglich ca. 2.4.

Die US 4,595,552 offenbart ein Verfahren und eine Vorrichtung zum Spritzgiessen von Preforms aus Polystyrol bei möglichst geringen Temperaturen um die Abkühlzeit und somit die Produktionskosten niedrig zu halten. Da aufgrund der geringeren Stärke von Polystyren im Vergleich zu den meisten zur Flaschenherstellung gebräuchlichen Kunststoffen die Wandstärke einer Polystyrenflasche und somit auch der entsprechenden Preform relativ gross ist, wirkt sich die Temperaturführung kritisch auf die Produktionskosten aus.

Gemäss dem angeführten Ausführungsbeispiel wird der Dorn auf zwischen 110 °C und 140 °C und die Ofentemperatur auf zwischen 315 °C und 480 °C aufgeheizt. Ein Schlauch mit einer Wandstärke von 0.89 mm wird 6 bis 12 Sekunden lang aufgeheizt. Dicke Vorformlinge mit einer Wandstärke von 1.52 mm werden 25 Sekunden oder länger aufgeheizt.

Aufgabe der vorliegenden Erfindung ist es, ein Streckblasverfahren zur Herstellung von Behältern, insbesondere Kunststoffflaschen, dahingehend zu modifizieren, dass dabei auch Polystyrol als Material verarbeitbar ist. Es soll auch ein Preform aus Polystyrol für die Herstellung von Kunststoffflaschen geschaffen werden, der für die Verwendung in einem Streckblasverfahren geeignet ist.

Die Lösung dieser Aufgabe besteht in einem Verfahren zur Herstellung eines Behälters aus Kunststoff, insbesondere einer Kunststoffflasche, in einem Streckblasverfahren, sowie in einem Preform, welche die im kennzeichnenden Abschnitt des Patentanspruchs 1 sowie des Patentanspruchs 10 angeführten Merkmale aufweisen Weiterbildungen und/oder vorteilhafte Ausführungsvarianten der Erfindung sind Gegenstand der abhängigen Patentansprüche.

Bei dem Verfahren zur Herstellung eines Kunststoffbehälters, insbesondere einer Kunststoffflasche, wird ein aus Polystyrol hergestellter Preform erwärmt und in eine Formkavität einer Blasform einer Streckblasanordnung eingebracht. Dort wird der Preform durch ein mit Überdruck eingeblasenes Gas, üblicherweise Luft, gemäss der Formkavität der Blasform aufgeblasen und dabei durch einen Reckdorn verstreckt. Der fertig aufgeblasene Behälter wird entformt. Das Verfahren zeichnet sich insbesondere dadurch aus, dass ein Preform aus Polystyrol in die Formkavität eingebracht wird, der mit einer mittleren Wandstärke von 1.6 mm bis 3.4 mm hergestellt worden ist, und der Streckblasvorgang des Preforms bei einer Blastemperatur von 125°C bis 140°C durchgeführt wird.

Zusätzlich zu der deutlich geringeren Dichte von Polystyrol gegenüber PET führt die relativ geringe mittlere Wandstärke des Preforms zu einer deutlichen Gewichtsreduktion bei vergleichbaren Eigenschaften des hergestellten Behälters, insbesondere einer Kunststoffflasche. Die geringere mittlere Wandstärke des Preforms hat auch Vorteile hinsichtlich des Energiebedarfs des Verfahrens, indem der Preform schneller auf die für den Blas- und Reckvorgang erforderliche Temperatur (Glasumwandlungstemperatur T_{G}) gebracht werden kann. Wegen der geringeren Wandstärke ist auch die Gefahr eines Temperaturgradienten von der Preformaussenseite zu seiner Innenseite deutlich verringert. Der Aufheizvorgang ist schneller durchführbar und die Gefahr von lokalen Verkohlungen des Materials verringert. Dies wird auch noch dadurch unterstützt, dass der Streckblasvorgang bei einer Blastemperatur von nur 125°C bis 140°C durchgeführt wird. Die Temperatur liegt über der Glasumwandlungstemperatur und gewährleistet ein ungehindertes biaxiales Strecken der Polystyrolketten.

Die Verwendung eines Preforms aus einem Polystyrol aus der Gruppe bestehend aus Polystyrol Homopolymer und Styrol Butadien Copolymer oder High Impact Polystyrol (HIPS) erlaubt die Herstellung von Kunststoffflaschen, die glasklar sind (Polystyrol Homopolymer) oder eine nur leicht milchige Eintrübung aufweisen (HIPS). Die Flaschen weisen ein ansprechendes Äusseres auf und haben nur einen unwesentlichen Einfluss auf die Farbe des in die Flasche abgefüllten Inhalts. Sie sind stabil und weisen insbesondere im Fall von HIPS eine erhöhte Schlagfestigkeit auf.

An dieser Stelle wird darauf hingewiesen, dass Polystyrol auch die Möglichkeit des Aufschäumens bietet. Dabei wird die Dichte deutlich verringert. Wegen der Verwendung geschäumten Polystyrols können die Preforms selbst bei den üblichen mittleren Wandstärken mit deutlich weniger Materialeinsatz hergestellt werden, was sich vorteilhaft auf die Herstellkosten der Kunststoffbehälter, insbesondere Kunststoffflaschen, auswirkt.

Es erweist sich von Vorteil, wenn der Streckblasvorgang mit einem globalen Streckverhältnis von etwa 4 -12 durchgeführt wird. Das globale Streckverhältnis definiert als das Produkt aus radialen Streckverhältnis und dem Längsstreckverhältnis, wobei das radiale Streckverhältnis gegeben ist durch das Verhältnis des Durchmessers des aufgeblasenen Behälters zum mittleren Preformdurchmesser, und das Längsstreckverhältnis als das Verhältnis der Länge des Behälterkörpers zur Länge des Preformkörpers definiert ist. Bei der Längenmessung wird, der Halsabschnitt des Behälters bzw. des Preforms, der sich beim Streckblasvorgang ausserhalb der Formkavität befindet, nicht berücksichtigt. Bei dem gewählten globalen Streckverhältnis ist eine ausreichende Orientierung des Polystyrols erzielbar, die für die Erlangung der erforderlichen Steifigkeits- und Festigkeitseigenschaften des Behälters erforderlich ist.

Die Längsreckung wird mit Vorteil derart durchgeführt, dass das Längsstreckverhältnis etwa 1-4 beträgt

Der Streckblasvorgang wird mit Vorteil derart durchgeführt, dass das radiale Streckverhältnis etwa 1,5 - 4 beträgt.

Die Reckung des Preforms erfolgt mit Hilfe eines Reckdoms, der vorzugsweise von einem Zylinder positioniert wird. Der Reckdom kann aber auch über Kurvensegmente und Abgriffrollen positioniert werden. Die Positionierung des Reckdoms ist beispielsweise in der DE 195 45 024 im Zusammenhang mit der Herstellung von PET-Flaschen im Streckblasverfahren beschrieben. Während das dort beschriebene Streckblasverfahren auch in Verbindung mit Polystyrol durchführbar ist, ist zu beachten, dass die dort angegebenen Parameter nur für Preforms aus PET Gültigkeit besitzen. Die Reckgeschwindigkeit, das ist die Geschwindigkeit mit der der Reckdom nach Anlage am Boden des Preforms in Richtung des Bodens der Formkavität verfahren wird, wird mit Vorteil grösser als 0.5 m/s gewählt. Es erweist sich von Vorteil, wenn für die Reckgeschwindigkeit ein Wert aus dem Intervall von 0.5 m/s bis 2 m/s gewählt wird.

Die Expansion des Preforms während des Streckblasvorgangs erfolgt üblicherweise durch Druckluft. Dabei kann es von Vorteil sein, wenn, je nach Produkt, unterschiedliche Blasphasen unterschieden werden. Üblicherweise erfolgt die Expansion des Preforms zum fertigen Behälter nach einem genau vorgegebenen Blasdruckverlauf. Dabei erweist es sich bei dem erfindungsgemässen Verfahren von Vorteil, wenn der maximale Blasdruck aus dem Intervall von 1 bar bis 12 bar gewählt wird.

Ein Preform aus Polystyrol zur Herstellung eines Kunststoffbehälters, insbesondere eines Kunststoffflasche, in einem Streckblasverfahren weist einen starren, im wesentlichen länglichen Körper auf, der an seinem einen Längsende geschlossen ausgebildet ist und an seinem gegenüberliegenden Längsende an einen mit einer Ausgiessöffnung versehenen Halsabschnitt angrenzt. Der Körper des Preforms ist vorzugsweise durch einen radial abragenden, flanschartigen Supportring vom Körper getrennt. Der Preform ist aus einem Polystyrol aus der Gruppe bestehend aus Polystyrol Homopolymer und Styrol Butadien Copolymer oder High Impact Polyctyrol (HIPS) gefertigt und weist eines mittlere Wandstärke von 1.6 mm - 3.4 mm auf.

Polystyrol weist mit ca.1.05 g/cm³ eine gegenüber PET deutlich geringere Dichte auf. Die Reduktion der mittleren Wandstärke des Preforms führt zu einer deutlichen Gewichtsreduktion bei vergleichbaren Eigenschaften des hergestellten Behälters, insbesondere einer Kunststoffflasche. Die relativ geringe mittlere Wandstärke des Preforms erweist sich von Vorteil hinsichtlich des Energiebedarfs für das Streckblasverfahren, indem der Preform schneller auf die für den Blas- und Reckvorgang erforderliche Temperatur (Glasumwandlungs-temperatur T_{G}) gebracht werden kann. Wegen der geringen Wandstärke ist auch die Gefahr eines Temperaturgradienten von der Preformaussenseite zu seiner Innenseite deutlich verringert. Der Aufheizvorgang ist mit dem erfindungsgemässen Preform schneller durchführbar, und die Gefahr von lokalen Verkohlungen des Materials ist verringert. Preforms aus Polystyrol Homopolymer oder Styrol Butadien Copolymer oder High Impact Polystyrol (HIPS) zeichnen sich durch eine hohe Schlagfestigkeit aus. Sie sind nahezu glasklar (Polystyrol Homopolymer) und weisen, wenn überhaupt, nur eine geringe milchige Eintrübung auf (HIPS).

Als Herstellverfahren kommt für den Preform ein Kunststoffspritzverfahren oder ein Fliesspressverfahren in Frage. Diese Verfahren sind mit anderen Kunststoffen bestens erprobt und eignen sich für eine grosstechnische Herstellung in hohen Stückzahlen.

Die Verwendung von Polystyrol als Material für die Preforms bietet auch die Möglichkeit des Schäumens. Durch das Schäumen werden nicht nur die Dichte des Materials und damit das Gewicht der Preforms reduziert. Geschäumte Preforms erlauben die Herstellung von Kunststoffbehältern, deren Wandung einen Grossteil der einfallenden UV-Strahlung und des sichtbaren Lichts diffus streuen. Die aus geschäumtem Polystyrol bestehende Behälterwandung bildet eine sehr gute UV und Lichtbarriere. Dadurch sind aus geschäumtem Polystyrol hergestellte Kunststoffbehälter auch für die Aufbewahrung von licht- und strahlungsempfindlichen Produkten, wie z.B. Milch oder dergleichen, sehr gut geeignet. Die Wandung aus geschäumtem Polystyrol weist auch eine deutlich verringerte Wärmeleitfähigkeit auf. Dadurch bleiben in derartigen Kunststoffbehältern untergebrachte Produkte, beispielsweise Lebensmittel, länger frisch.

Ein weiterer Vorteil von aus geschäumtem Polystyrol bestehenden Preforms besteht darin, dass durch das Schäumen die Dichte des Styrols unter den Wert 1 g/cm³ gedrückt wird. Aus derartigen, geschäumten Preforms hergestellte Kunststoffbehälter können daher im sogenannten Sink Float Verfahren sehr leicht von PET-Behältern getrennt werden. Dies ist ökologisch sehr wünschenswert und erleichtert das Recycling der Kunststoffbehälter.

## Patentansprüche

1. Verfahren zur Herstellung einer Kunststoffflasche bei dem ein aus Polystyrol hergestellter Preform, in eine Formkavität einer Blasform einer Streckblasanordnung eingebracht und durch ein mit Überdruck eingeblasenes Gas gemäss der Formkavität der Blasform aufgeblasen und dabei durch einen Reckdom verstreckt wird, und die fertig streckgeblasene Kunststoffflasche entformt wird, **dadurch gekennzeichnet, dass** ein Preform aus Polystyrol erwärmt und in die Formkavität eingebracht wird, der mit einer mittleren Wandstärke von 1.6 nun bis 3.4 mm hergestellt worden ist, und der Streckblasvorgang des Preforms bei einer Blastemperatur von 125°C bis 140°C durchgeführt wird.

2. Verfahren nach Anspruch 1, **dadurch gekennzeichnet, dass** der Preform aus einem Styrol aus der Gruppe bestehend aus Polystyrol Homopolymer Styrol Butadien Copolymer oder High Impact Polystyrol (HIPS) hergestellt wird.

3. Verfahren nach einem der vorangehenden Ansprüche, **dadurch gekennzeichnet, dass** der Streckblasvorgang mit einem globalen Streckverhältnis von etwa 4 -12 durchgeführt wird.

4. Verfahren nach einem der vorangehenden Ansprüche, **dadurch gekennzeichnet, dass** der Streckblasvorgang mit einem Längsstreckverhältnis von etwa 1-4 durchgeführt wird.

5. Verfahren nach einem der vorangehenden Ansprüche, **dadurch gekennzeichnet, dass** der Streckblasvorgang mit einem radialen Streckverhältnis von etwa 1.5 - 4 durchgeführt wird.

6. Verfahren nach einem der vorangehenden Ansprüche, **dadurch gekennzeichnet, dass** eine Reckgeschwindigkeit grösser als 0.5 m/s gewählt wird.

7. Verfahren nach Anspruch 8, **dadurch gekennzeichnet, dass** für die Reckgeschwindigkeit ein Wert aus dem Intervall von 0.5 m/s bis 2 m/ s gewählt wird.

8. Verfahren nach einem der vorangehenden Ansprüche, **dadurch gekennzeichnet, dass** der Streckblasvorgang mit einem Blasdruck aus dem Intervall von 1 bar bis 12 bar gewählt wird.

9. Verfahren nach einem der vorangehenden Ansprüche, **dadurch gekennzeichnet, dass** ein Preform aus geschäumtem Polystyrol verwendet wird.

10. Preform aus Polystyrol zur Herstellung eines Kunststofrbehalters, insbesondere einer Kunststoffflasche, in einem Streckblasverfahren gemäss einem der vorangehenden Ansprüche, welcher Preform einen starren, im wesentlichen länglichen Körper aufweist, der an seinem einen Längsende geschlossen ausgebildet ist und an seinem gegenüberliegenden Längsende an einen mit einer Ausgiessöffnung versehenen Halsabschnitt angrenzt, der vorzugsweise durch einen radial abragenden, flanschartigen Supportring vom Körper getrennt ist, **dadurch gekennzeichnet, dass** der Preform aus einem Styrol Butadien Copolymer oder einem High Impact Polystyrol (HIPS) gefertigt ist und eine mittlere Wandstärke von 1.6 mm bis 3.4 mm aufweist.

11. Preform nach Anspruch 10, **dadurch gekennzeichnet, dass** er nach einem Verfahren aus der Gruppe bestehend aus Kunststoff spritzen und Fliesspressen gefertigt ist.

12. Preform nach Anspruch 10 oder 11, **dadurch gekennzeichnet, dass** er aus geschäumtem Polystyrol einer Dichte von weniger als 1 g/cm³ besteht.

13. Verfahren, **dadurch gekennzeichnet, dass** ein Kunststoffbehälter, insbesondere eine Kunststoffflasche, in einem Streckblasverfahren aus einem Preform gemäss einem der Ansprüche 10 - 12 hergestellt wird.

## Claims

1. Method for manufacturing a plastic bottle wherein a preform made of polystyrene is brought into a mould cavity of a blow mould of a stretch blow moulding arrangement and is inflated by a gas blown with overpressure in compliance with the mould cavity of the blow mould by being stretched by a stretching mandrel and the ready stretched blown plastic bottle is demoulded, **characterized in that** a preform made of polystyrene is heated and brought into the mould cavity, the preform being manufactured with a mean wall thickness of 1,6 mm to 3,4 mm, and the stretch blow process of the preform is carried out at a blowing temperature of 125 °C to 140 °C.

2. Method according to claim 1, **characterized in that** the preform is manufactured from a styrene from the group comprising polystyrene homopolymer and styrene-butadiene copolymer or high impact polystyrene (HIPS).

3. Method according to any of the preceding claims, **characterized in that** the stretch blow process is carried out with a global stretching ratio of approximately 4 to 12.

4. Method according to any of the preceding claims, **characterized in that** the stretch blow process is carried out with a longitudinal stretching ratio of approximately 1 to 4.

5. Method according to any of the preceding claims, **characterized in that** the stretch blow process is carried out with a radial stretching ratio of approximately 1,5 to 4.

6. Method according to any of the preceding claims, **characterized in that** a stretching rate higher than 0,5 m/s is chosen.

7. Method according to claim 6, **characterized in that** for the stretching rate a value is chosen in the interval from 0,5 m/s to 2 m/s.

8. Method according to any of the preceding claims, **characterized in that** the stretch blow process is chosen with a blow pressure in the interval from 1 bar to 12 bar.

9. Method according to any of the preceding claims, **characterized in that** a preform made of expanded polystyrene is used.

10. Preform made of polystyrene for the manufacturing of a plastic container, in particular of a plastic bottle, in a stretch blow method according to any of the preceding claims, the preform having a rigid substantially elongated body which is configured closed at its one longitudinal end and which is adjacent at its opposite longitudinal end to a neck section provided with a pouring opening, the neck section being separated from the body preferably by a radially projecting flange-like support ring, **characterized in that** the preform is made of a styrene-butadiene copolymer or of a high impact polystyrene (HIPS) and has a mean wall thickness of 1,6 mm to 3,4 mm.

11. Preform according to claim 10, **characterized in that** it is manufactured according to a method from the group comprising injection moulding and hot extrusion.

12. Preform according to claim 10 or 11, **characterized in that** it is made of expanded polystyrene with a density of less than 1 g/cm³.

13. Method **characterized in that** a plastic container, in particular a plastic bottle, is manufactured in a stretch blow method from a preform according to any of the claims 10 to 12.

## Revendications

1. Procédé pour la fabrication d'une bouteille en matière plastique pour lequel une préforme fabriquée en polystyrène est mise en place dans une cavité de moulage d'un moule de soufflage d'un arrangement de soufflage étirage, est gonflée par un gaz insufflé avec surpression conformément à la cavité de moulage du moule de soufflage en étant étirée par un mandrin d'étirage et la bouteille en matière plastique soufflée étirée finie est démoulée, **caractérisé en ce qu'**une préforme en polystyrène est chauffée et mise en place dans la cavité de moulage, préforme qui a été fabriquée avec une épaisseur de paroi moyenne de 1,6 mm à 3,4 mm et que l'opération de soufflage étirage de la préforme est effectuée à une température de soufflage de 125 °C à 140 °C.

2. Procédé selon la revendication 1, **caractérisé en ce que** la préforme est fabriquée en un styrène du groupe constitué par un homopolymère de polystyrène et un copolymère styrène butadiène ou du polystyrène à impact élevé (HIPS).

3. Procédé selon l'une des revendications précédentes, **caractérisé en ce que** l'opération de soufflage étirage est effectuée avec un rapport d'étirage global d'environ 4 à 12.

4. Procédé selon l'une des revendications précédentes, **caractérisé en ce que** l'opération de soufflage étirage est effectuée avec un rapport d'étirage longitudinal d'environ 1 à 4.

5. Procédé selon l'une des revendications précédentes, **caractérisé en ce que** l'opération de soufflage étirage est effectuée avec un rapport d'étirage radial d'environ 1,4 à 4.

6. Procédé selon l'une des revendications précédentes, **caractérisé en ce qu'**une vitesse d'étirage supérieure à 0,5 m/s est choisie.

7. Procédé selon la revendication 6, **caractérisé en ce que** pour la vitesse d'étirage une valeur est choisie dans l'intervalle de 0,5 m/s à 2 m/s.

8. Procédé selon l'une des revendications précédentes, **caractérisé en ce que** l'opération de soufflage étirage est choisie avec une pression de soufflage dans l'intervalle de 1 bar à 12 bar.

9. Procédé selon l'une des revendications précédentes, **caractérisé en ce qu'**une préforme en polystyrène expansé est utilisée.

10. Préforme en polystyrène pour la fabrication d'un récipient en matière plastique, en particulier d'une bouteille en matière plastique, dans un procédé de soufflage étirage selon l'une des revendications précédentes, laquelle préforme présente un corps rigide, substantiellement allongé, qui est configuré fermé à l'une de ses extrémités longitudinales et qui est adjacent, à son extrémité longitudinale opposée, à une section de col pourvue d'une ouverture pour verser, section de col qui est séparée du corps de préférence par un anneau de support de type bride qui fait saillie radialement, **caractérisée en ce que** la préforme est fabriquée en un copolymère styrène butadiène ou un polystyrène à impact élevé (HIPS) et présente une épaisseur de paroi moyenne de 1,6 mm à 3,4 mm.

11. Préforme selon la revendication 10, **caractérisée en ce qu'**elle est fabriquée selon un procédé du groupe comportant le moulage par injection de plastique et le formage par fluage.

12. Préforme selon la revendication 10 ou 11, **caractérisée en ce qu'**elle est constituée par du polystyrène expansé d'une densité inférieure à 1 g/cm³.

13. Procédé, **caractérisé en ce qu'**un récipient en matière plastique, en particulier une bouteille en matière plastique, est fabriqué dans un procédé de soufflage étirage à partir d'une préforme selon l'une des revendications 1 à 12.
